# EUROPÄISCHE PATENTSCHRIFT

(11) **EP 3 507 155 B1**
(45) Veröffentlichungstag und Bekanntmachung des Hinweises auf die Patenterteilung: **06.07.2022**
(21) Anmeldenummer: 17754134.9
(22) Anmeldetag: 09.08.2017
(51) Int. Cl.: B60T 13/68, B60T 15/02

(54) **MAGNETVENTILVORRICHTUNG FÜR EIN BREMSSYSTEM FÜR EIN FAHRZEUG, BREMSSYSTEM FÜR EIN FAHRZEUG UND VERFAHREN ZUM MONTIEREN EINER MAGNETVENTILVORRICHTUNG FÜR EIN BREMSSYSTEM FÜR EIN FAHRZEUG**
SOLENOID VALVE ASSEMBLY FOR A BRAKING SYSTEM FOR A VEHICLE, BRAKING SYSTEM FOR A VEHICLE, AND METHOD FOR MOUNTING A SOLENOID VALVE ASSEMBLY FOR A BRAKING SYSTEM FOR A VEHICLE
DISPOSITIF D'ÉLECTROVANNES POUR UN SYSTÈME DE FREINAGE D'UN VÉHICULE, SYSTÈME DE FREINAGE D'UN VÉHICULE ET PROCÉDÉ DE MONTAGE D'UN DISPOSITIF D'ÉLECTROVANNES POUR UN SYSTÈME DE FREINAGE D'UN VÉHICULE

(30) Priorität: 05.09.2016 DE 102016116516
(43) Veröffentlichungstag der Anmeldung: 10.07.2019
(73) Patentinhaber: KNORR-BREMSE Systeme für Nutzfahrzeuge GmbH, 80809 München (DE)
(72) Erfinder: RÖTHER, Friedbert, 74389 Cleebronn (DE); WERNER, Kai, 71638 Ludwigsburg (DE); WIEDER, Gerhard, 74354 Besigheim (DE); WÖRNER, Ralf, 75233 Tiefenbronn (DE)
(86) Internationale Anmeldenummer: PCT/EP2017/070258
(87) Internationale Veröffentlichungsnummer: WO 2018/041576

(56) Entgegenhaltungen:
- WO-A1-2008/034524
- DE-A1- 3 921 078

## Beschreibung

Die Erfindung betrifft eine Magnetventilvorrichtung für ein Bremssystem für ein Fahrzeug, ein Bremssystem für ein Fahrzeug und ein Verfahren zum Montieren einer Magnetventilvorrichtung für ein Bremssystem für ein Fahrzeug.

Es können bei pneumatischen Geräten mit einem oder mehreren aussenliegenden Ventilmagneten die Ventilmagneten beispielsweise mit separaten Haltern befestigt sein.

Die WO 2008/034524 A1 offenbart ein zweistufiges Magnetventil für eine elektropneumatische Ventilsteuereinheit, wobei das Magnetventil ein Magnetspulensystem bzw. eine Magnetspule, die mit einer ersten und zweiten Stromstärke bestrombar ist, und eine in der Magnetspule aufgenommene Magnetventileinrichtung mit einem Primärventil und einem Sekundärventil aufweist, wobei die Magnetventileinrichtung als eine von einer Seite her einzusetzende Ventilpatrone ausgebildet ist, wobei das Magnetventil zum Einsatz in ein Vorsteuergehäuse vorgesehen ist.

Der Erfindung stellt sich die Aufgabe eine verbesserte Magnetventilvorrichtung für ein Bremssystem für ein Fahrzeug, ein verbessertes Bremssystem für ein Fahrzeug und ein verbessertes Verfahren zum Montieren einer Magnetventilvorrichtung für ein Bremssystem für ein Fahrzeug bereitzustellen.

Erfindungsgemäß wird diese Aufgabe durch eine Magnetventilvorrichtung für ein Bremssystem für ein Fahrzeug, durch ein Bremssystem für ein Fahrzeug und durch ein Verfahren zum Montieren einer Magnetventilvorrichtung für ein Bremssystem für ein Fahrzeug mit den Merkmalen der Hauptansprüche gelöst. Vorteilhafte Ausgestaltungen und Weiterbildungen der Erfindung ergeben sich aus den nachfolgenden Unteransprüchen.

Gemäß Ausführungsformen der vorliegenden Erfindung kann insbesondere für ein Bremssystem eines Fahrzeugs ein Magnetventil eingesetzt werden, bei dem zur Vorsteuerung grundsätzlich ein Doppelmagnet eingesetzt werden kann, der beispielsweise je nach Funktionsumfang des Bremssystems bzw. Einsatzzweck des Magnetventils einseitig oder beidseitig bestückt bzw. mit Ventilkomponenten versehen werden kann. Abhängig von einer konkreten Anwendung des Magnetventils und auf skalierbare Weise kann ein Vorsteuerventil oder können beispielsweise zwei Vorsteuerventile vorgesehen werden.

Vorteilhafterweise kann gemäß Ausführungsformen der vorliegenden Erfindung insbesondere eine vereinfachte Befestigung des Doppelmagneten in einer Ventilvorrichtung erreicht werden. Aufgrund der Art der Skalierbarkeit können beispielsweise ein Kabelbaum und eine Verrohrung im Fahrzeug gleich bleiben, ob nun ein Vorsteuerventil oder zwei Vorsteuerventile vorgesehen sind. Somit kann beispielsweise eine Ventilvorrichtung für ein Bremssystem im Fahrzeug grundsätzlich skalierbar bzw. anpassbar ausgeführt sein, ohne dass im Fahrzeug bei einer Skalierung oder Anpassung Änderungen erforderlich wären. Diese Skalierbarkeit kann insbesondere hergestellt werden, indem stets ein Doppelmagnet eingesetzt werden kann, welcher für eine Betriebsart einseitig und für eine andere Betriebsart beidseitig bestückt werden kann.

Es wird eine Magnetventilvorrichtung für ein Bremssystem für ein Fahrzeug vorgestellt, wobei die Magnetventilvorrichtung eine Hauptventileinheit, eine mit der Hauptventileinheit fluidmechanisch verbundene Vorsteuerventileinheit und ein Gehäuse zum Aufnehmen mindestens der Hauptventileinheit und der Vorsteuerventileinheit aufweist, wobei die Vorsteuerventileinheit eine Doppelmagneteinheit und zumindest eine Ventileinrichtung aufweist, wobei die Doppelmagneteinheit mit zumindest einer Ventileinrichtung bestückbar ausgeformt ist, wobei die Doppelmagneteinheit zumindest zwei Aufnahmeabschnitte zur Aufnahme von Ventileinrichtungen und zumindest zwei Magneteinrichtungen zum Betätigen von Ventileinrichtungen aufweist.

Bei dem Fahrzeug kann es sich um ein Kraftfahrzeug handeln, insbesondere um ein Nutzfahrzeug oder ein anderes Straßenfahrzeug oder spurgebundenes Fahrzeug. Die Magnetventilvorrichtung kann auch als eine Ventilvorrichtung bezeichnet werden. Die Magnetventilvorrichtung kann beispielsweise als ein Vorderachsmodul, Hinterachsmodul, Relaisventil oder anderes Bremssteuerventil in dem Bremssystem verwendet werden. Bei der Magnetventilvorrichtung kann es sich um ein vorgesteuertes Magnetventil bzw. ein Magnetventil mit Vorsteuerung handeln. Die Magnetventilvorrichtung kann für einen pneumatischen oder hydraulischen Betrieb vorgesehen sein.

Gemäß einer Ausführungsform können die Aufnahmeabschnitte und die Magneteinrichtungen der Doppelmagneteinheit von einem gemeinsamen Korpus der Doppelmagneteinheit umschlossen sein. Die Doppelmagneteinheit kann hierbei einstückig oder mehrstückig ausgeführt sein. Eine solche Ausführungsform bietet den Vorteil, dass die Vorsteuerventileinheit auf einfache, sichere und schnelle Weise montiert werden kann, wobei stets beide Magneteinrichtungen der Doppelmagneteinheit verbaut werden können.

Auch kann die Doppelmagneteinheit in dem Gehäuse eingespannt anordenbar oder angeordnet sein. Eine solche Ausführungsform bietet den Vorteil, dass eine einfache, stabile und schnelle Montage der Doppelmagneteinheit und somit der Vorsteuerventileinheit ermöglicht wird.

Ferner kann das Gehäuse zumindest eine Verschließeinrichtung aufweisen, mittels derer das Gehäuse offenbar und verschließbar sein kann, um mindestens die Vorsteuerventileinheit zugreifbar zu machen. Die Verschließeinrichtung kann beispielsweise als eine Schraube, eine Klammer oder ein anderes Befestigungsmittel ausgeformt sein. Eine solche Ausführungsform bietet den Vorteil, dass zumindest auf die Vorsteuerventileinheit einfach und schnell zugegriffen werden kann bzw. eine Montage und Bestückung der Vorsteuerventileinheit einfach und schnell erfolgen kann.

Gemäß einer Ausführungsform kann das Gehäuse ein erstes Gehäuseteil und ein zweites Gehäuseteil aufweisen. Hierbei können die Gehäuseteile kraftschlüssig und zusätzlich oder alternativ formschlüssig miteinander verbindbar oder verbunden sein. Die Doppelmagneteinheit kann zwischen den Gehäuseteilen eingespannt anordenbar oder angeordnet sein. Die Gehäuseteile können mittels zumindest einer Verschließeinrichtung miteinander verbindbar oder verbunden sein. Eine solche Ausführungsform bietet den Vorteil, dass eine stabile Montage insbesondere der Vorsteuerventileinheit sowie eine einfache Bestückung derselben und zuverlässige und unkomplizierte Einhausung von Ventilkomponenten ermöglicht werden können.

Insbesondere kann das Gehäuse zumindest partiell aus einem metallischen Material ausgeformt sein. Alternativ kann das Gehäuse partiell aus einem metallischen Material und partiell aus einem Kunststoffmaterial ausgeformt sein. Beispielsweise kann ein erstes Gehäuseteil des Gehäuses aus einem metallischen Material ausgeformt sein, wobei ein zweites Gehäuseteil des Gehäuses aus einem Kunststoffmaterial ausgeformt sein kann. Eine solche Ausführungsform bietet den Vorteil, dass Stabilität und Robustheit sowie gegebenenfalls Gewichtseinsparungen bei dem Gehäuse realisiert werden können.

Ferner kann die Vorsteuerventileinheit einen elektrischen Anschluss zum Kontaktieren der Doppelmagneteinheit aufweisen. Hierbei kann ein Steckerabschnitt des elektrischen Anschlusses sich aus dem Gehäuse heraus erstrecken. Eine solche Ausführungsform bietet den Vorteil, dass eine einfache elektrische Kontaktierung und somit Ansteuerung der Vorsteuerventileinheit erreicht werden kann. Es kann auch eine Kabelklemmung zur Zugentlastung eines an dem Steckerabschnitt angeschlossenen elektrischen Kabels ermöglicht werden.

Gemäß einer Ausführungsform kann die Ventileinrichtung in einem ersten der Aufnahmeabschnitte der Doppelmagneteinheit aufgenommen sein und kann ein zweiter der Aufnahmeabschnitte der Doppelmagneteinheit unbestückt sein. Alternativ kann die Ventileinrichtung in einem ersten der Aufnahmeabschnitte der Doppelmagneteinheit aufgenommen sein und kann eine weitere Ventileinrichtung in einem zweiten der Aufnahmeabschnitte der Doppelmagneteinheit aufgenommen sein. Eine solche Ausführungsform bietet den Vorteil, dass je nach Betriebsart bzw. Einsatzzweck der Magnetventilvorrichtung eine geeignete Bestückung der Vorsteuerventileinheit mit einer oder zwei Ventileinrichtungen gewählt werden kann. Bei beidseitiger Bestückung können auch Zwischendrücke eingeregelt werden.

Auch kann die Magnetventilvorrichtung zumindest ein Rückschlagventil aufweisen. Dabei kann das Rückschlagventil zwischen einem Steuerfluidanschluss der Magnetventilvorrichtung und der Hauptventileinheit fluidmechanisch parallel zu der Vorsteuerventileinheit geschaltet sein. Zusätzlich oder alternativ kann das Rückschlagventil zwischen einem Vorratsfluidanschluss der Magnetventilvorrichtung und der Vorsteuerventileinheit fluidmechanisch parallel zu der Hauptventileinheit geschaltet sein. Das zumindest eine Rückschlagventil kann als ein einseitiges Rückschlagventil und zusätzlich oder alternativ als ein Druckbegrenzungsventil ausgeführt sein. Eine solche Ausführungsform bietet den Vorteil, dass ein Druckabfluss zum Steuerfluidanschluss hin vermieden werden kann bzw. eine Bremsanforderung eines Fahrers des Fahrzeugs gegenüber automatischen, beides Weise von Assistenzsystemen generierten Bremsanforderungen priorisiert werden kann.

Zudem kann die Magnetventilvorrichtung zumindest einen Vorratsfluidanschluss zum Anschluss der Magnetventilvorrichtung an einen Fluidvorrat des Bremssystems aufweisen. Hierbei kann der zumindest eine Vorratsfluidanschluss fluidmechanisch mit der Hauptventileinheit und der Vorsteuerventileinheit verbunden sein. Auch kann die Magnetventilvorrichtung zumindest einen Verbraucherfluidanschluss zum Anschluss der Magnetventilvorrichtung an einen Verbraucher des Bremssystems aufweisen. Dabei kann der zumindest eine Verbraucherfluidanschluss fluidmechanisch mit der Hauptventileinheit verbunden sein. Ferner kann die Magnetventilvorrichtung zumindest einen Steuerfluidanschluss zum Anschluss der Magnetventilvorrichtung an eine Steuereinrichtung des Bremssystems aufweisen. Dabei kann der zumindest eine Steuerfluidanschluss fluidmechanisch über die Vorsteuerventileinheit mit der Hauptventileinheit verbunden sein. Eine solche Ausführungsform bietet den Vorteil, dass die Anzahl von Anschlüssen bei einseitiger und beidseitige Bestückung der Doppelmagneteinheit identisch sein kann und somit eine Verrohrung im Fahrzeug bei beiden Ausführungsvarianten gleich bleiben kann.

Alternativ kann die Magnetventilvorrichtung zumindest einen Vorratsfluidanschluss zum Anschluss der Magnetventilvorrichtung an einen Fluidvorrat des Bremssystems aufweisen. Hierbei kann der zumindest eine Vorratsfluidanschluss fluidmechanisch mit der Hauptventileinheit verbunden sein. Zudem kann die Magnetventilvorrichtung zumindest einen Kanal zum Entlüften der Magnetventilvorrichtung aufweisen. Dabei kann der zumindest eine Kanal fluidmechanisch mit der Vorsteuerventileinheit verbunden sein. Auch kann die Magnetventilvorrichtung zumindest einen Verbraucherfluidanschluss zum Anschluss der Magnetventilvorrichtung an einen Verbraucher des Bremssystems aufweisen. Dabei kann der zumindest eine Verbraucherfluidanschluss fluidmechanisch mit der Hauptventileinheit verbunden sein. Ferner kann die Magnetventilvorrichtung zumindest einen Steuerfluidanschluss zum Anschluss der Magnetventilvorrichtung an eine Steuereinrichtung des Bremssystems aufweisen. Dabei kann der zumindest eine Steuerfluidanschluss fluidmechanisch über die Vorsteuerventileinheit mit der Hauptventileinheit verbunden sein. Eine solche Ausführungsform bietet den Vorteil, dass die Magnetventilvorrichtung somit als Druckabbauventil und/oder Druckhalteventil, insbesondere zur ABS-Regelung (ABS = Antiblockiersystem), genutzt werden kann.

Es wird auch ein Bremssystem für ein Fahrzeug vorgeschlagen, wobei das Bremssystem zumindest eine Einheit einer Ausführungsform der vorstehend genannten Magnetventilvorrichtung aufweist.

In Verbindung mit dem Bremssystem kann zumindest eine Einheit einer Ausführungsform der vorstehend genannten Magnetventilvorrichtung vorteilhaft für eine Betätigung zumindest einer Bremseinrichtung eingesetzt oder verwendet werden.

Gemäß einer Ausführungsform kann die zumindest eine Magnetventilvorrichtung ausgebildet sein, um eine Vorderachse und/oder eine Hinterachse des Fahrzeugs anzusteuern. Auch kann das Bremssystem hierbei zumindest ein Schaltventil aufweisen, wobei die zumindest eine Magnetventilvorrichtung und das zumindest eine Schaltventil ausgebildet sein können, um zusammenzuwirken. Eine solche Ausführungsform bietet den Vorteil, dass die Magnetventilvorrichtung für ein Vorderachsmodul und/oder für ein Hinterachsmodul verwendbar ist.

Es wird ferner ein Verfahren zum Montieren einer Magnetventilvorrichtung für ein Bremssystem für ein Fahrzeug vorgestellt, mit
einem Schritt des Bereitstellens einer Ausführungsform der vorstehend genannten Magnetventilvorrichtung,
einem Schritt des Anordnens der Doppelmagneteinheit in der Vorsteuerventileinheit, einem Schritt des Einsetzens der zumindest einen Ventileinrichtung in zumindest einen der Aufnahmeabschnitte der Doppelmagneteinheit, um die Doppelmagneteinheit zu bestücken, und
einem Schritt des Verschließens des Gehäuses, um die Vorsteuerventileinheit und die Hauptventileinheit einzuhausen.

Durch Ausführen des Verfahrens kann eine Ausführungsform der vorstehend genannten Magnetventilvorrichtung vorteilhaft montiert werden.

Ausführungsbeispiele des hier vorgestellten Ansatzes sind in den Zeichnungen dargestellt und in der nachfolgenden Beschreibung näher erläutert. Es zeigt:
- Fig. 1: eine schematische Darstellung eines Fahrzeugs mit einem Bremssystem gemäß einem Ausführungsbeispiel.
- Fig. 2: eine perspektivische Darstellung einer Magnetventilvorrichtung gemäß einem Ausführungsbeispiel.
- Fig. 3: eine schematische Schnittdarstellung einer Magnetventilvorrichtung gemäß einem Ausführungsbeispiel.
- Fig. 4: eine schematische Schnittdarstellung einer Magnetventilvorrichtung gemäß einem Ausführungsbeispiel.
- Fig. 5: einen schematischen Schaltplan einer Magnetventilvorrichtung gemäß einem Ausführungsbeispiel.
- Fig. 6: einen schematischen Schaltplan einer Magnetventilvorrichtung gemäß einem Ausführungsbeispiel.
- Fig. 7: einen schematischen Schaltplan einer Magnetventilvorrichtung gemäß einem Ausführungsbeispiel.
- Fig. 8: ein Ablaufdiagramm eines Verfahrens zum Montieren gemäß einem Ausführungsbeispiel.
- Fig. 9: eine schematische Schnittdarstellung einer Magnetventilvorrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

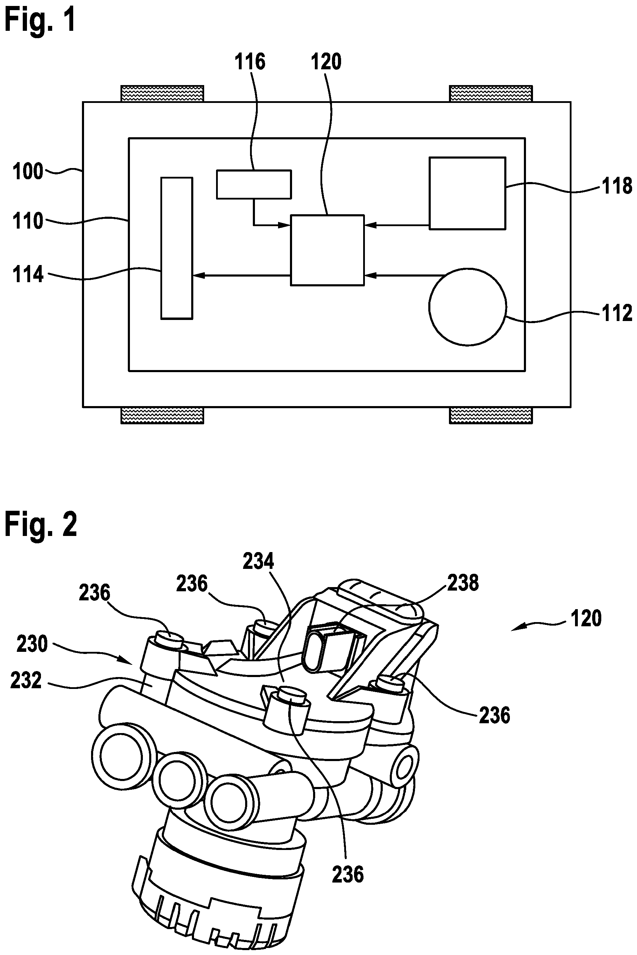

Fig. 1 zeigt eine schematische Darstellung eines Fahrzeugs 100 mit einem Bremssystem 110 gemäß einem Ausführungsbeispiel. Bei dem Fahrzeug 100 handelt es sich beispielsweise um ein Nutzfahrzeug. Das Bremssystem 110 weist einen Fluidvorrat 112, beispielsweise einen Drucklufttank, einen Verbraucher 114, beispielsweise eine Bremseinrichtung, eine Steuereinrichtung 116, beispielsweise ein Fußbremsventil bzw. Bremsventil in Zuordnung zu einem Bremspedal des Fahrzeugs 100, ein elektronisches Steuergerät 118, beispielsweise in Zusammenhang mit einem Assistenzsystem des Fahrzeugs 100, und beispielhaft lediglich eine Magnetventilvorrichtung 120 auf.

Dabei sind in dem Bremssystem 110 der Fluidvorrat 112, der Verbraucher 114 und die Steuereinrichtung 116 fluidmechanisch mit der Magnetventilvorrichtung 120 verbunden. Ferner ist das elektronische Steuergerät 118 signalübertragungsfähig mit der Magnetventilvorrichtung 120 verbunden. Auf die Magnetventilvorrichtung 120 wird unter Bezugnahme auf die nachfolgenden Figuren noch detaillierter eingegangen.

Fig. 2 zeigt eine perspektivische Darstellung einer Magnetventilvorrichtung 120 gemäß einem Ausführungsbeispiel. Die Magnetventilvorrichtung 120 ist für ein Bremssystem für ein Fahrzeug vorgesehen. Dabei kann die Magnetventilvorrichtung 120 beispielsweise als ein Vorderachsmodul oder Hinterachsmodul des Fahrzeugs verwendet werden. Die Magnetventilvorrichtung 120 entspricht oder ähnelt hierbei der Magnetventilvorrichtung aus Fig. 1.

Die Magnetventilvorrichtung 120 weist eine Hauptventileinheit, eine mit der Hauptventileinheit fluidmechanisch verbundene Vorsteuerventileinheit und ein Gehäuse 230 zum Aufnehmen mindestens der Hauptventileinheit und der Vorsteuerventileinheit auf. Davon ist in Fig. 2 von der Magnetventilvorrichtung 120 darstellungsbedingt lediglich das Gehäuse 230 gezeigt.

Die Vorsteuerventileinheit weist eine Doppelmagneteinheit und zumindest eine Ventileinrichtung auf. Die Doppelmagneteinheit ist mit zumindest einer Ventileinrichtung bestückbar ausgeformt. Die Doppelmagneteinheit weist zumindest zwei Aufnahmeabschnitte zur Aufnahme von Ventileinrichtungen und zumindest zwei Magneteinrichtungen zum Betätigen von Ventileinrichtungen auf.

Gemäß dem hier dargestellten Ausführungsbeispiel ist die Doppelmagneteinheit in dem Gehäuse 230 eingespannt angeordnet. Genau gesagt ist hierbei die Doppelmagneteinheit zwischen einem ersten Gehäuseteil 232 und einem zweiten Gehäuseteil 234 eingespannt angeordnet. Hierbei weist das erste Gehäuseteil 232 lediglich beispielhaft einen Haltebügel auf, mittels dessen die Doppelmagneteinheit bzw. die Vorsteuerventileinheit gegen das zweite Gehäuseteil 234 einklemmbar ist. Somit weist gemäß dem in Fig. 2 gezeigten Ausführungsbeispiel das Gehäuse 230 das erste Gehäuseteil 232 und das zweite Gehäuseteil 234 auf. Die Gehäuseteile 232 und 234 sind kraftschlüssig und/oder formschlüssig miteinander verbunden.

Das Gehäuse 230 weist gemäß dem hier gezeigten Ausführungsbeispiel ferner zumindest eine Verschließeinrichtung 236 auf, wobei in Fig. 2 lediglich beispielhaft vier Verschließeinrichtungen 236 in Gestalt von Schrauben dargestellt sind. Mittels der Verschließeinrichtungen 236 sind die Gehäuseteile 232 und 234 miteinander verbunden. Anders ausgedrückt ist das Gehäuse 230 mittels der Verschließeinrichtungen 236 öffenbar und verschließbar, um mindestens die Vorsteuerventileinheit zugreifbar zu machen.

Lediglich beispielhaft kann das erste Gehäuseteil 232 aus einem metallischen Material ausgeformt sein. Hierbei kann das erste Gehäuseteil 232 beispielsweise ein Gussteil oder Druckgussteil aus Aluminium oder dergleichen sein. Ferner kann das zweite Gehäuseteil 234 aus einem Kunststoffmaterial oder aus einem metallischen Material ausgeformt sein.

Die Vorsteuerventileinheit weist einen elektrischen Anschluss zum Kontaktieren der Doppelmagneteinheit auf. Von dem elektrischen Anschluss ist darstellungsbedingt in Fig. 2 lediglich ein Steckerabschnitt 238 gezeigt. Der Steckerabschnitt 238 erstreckt sich aus dem Gehäuse 230, insbesondere dem zweiten Gehäuseteil 234 heraus.

Anders ausgedrückt weist bei der Magnetventilvorrichtung 120 das als Gehäuseoberteil ausgeführte zweite Gehäuseteil 234 einen Geometriesprung auf. An diesem Geometriesprung ist bzw. wird die Doppelmagneteinheit bzw. der Ventilmagnet mit Hilfe der Verschließeinrichtungen 236 bzw. Gehäuseschrauben 236 auf dem als Gehäuseunterteil ausgeführten ersten Gehäuseteil 232 befestigt. Der Steckerabschnitt 238 bzw. elektronische Stecker 238 des Ventilmagneten ragt hierbei über das Gehäuse 230 und ist von einer Gegenseite aus kontaktierbar. Dadurch kann auch eine Kabelklemmung bzw. Zugentlastung oberhalb des zweiten Gehäuseteils 234 ermöglicht werden.

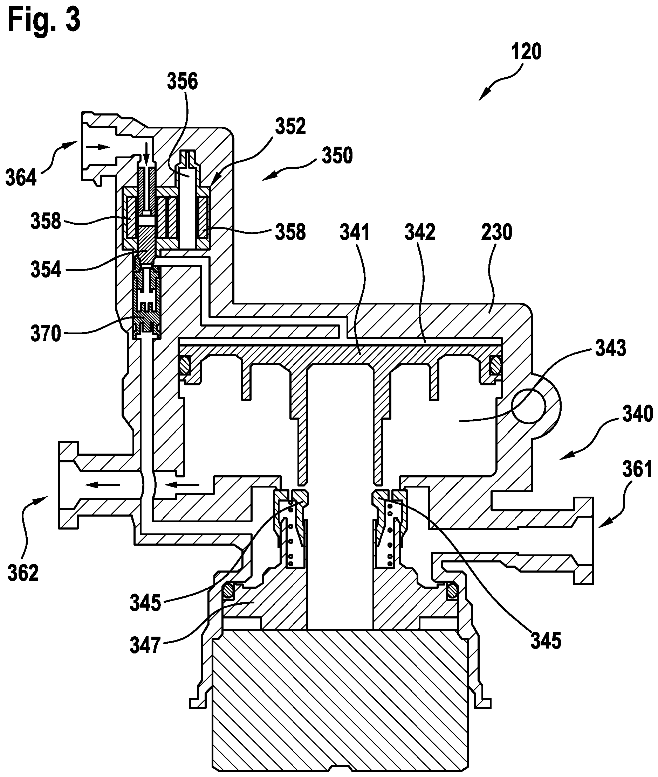

Fig. 3 zeigt eine schematische Schnittdarstellung einer Magnetventilvorrichtung 120 gemäß einem Ausführungsbeispiel. Die Magnetventilvorrichtung 120 entspricht oder ähnelt hierbei der Magnetventilvorrichtung aus Fig. 1 bzw. Fig. 2. Anders ausgedrückt zeigt Fig. 3 insbesondere eine schematische Schnittdarstellung der Magnetventilvorrichtung 120 aus Fig. 2.

Hierbei sind auch eine Hauptventileinheit 340 und eine Vorsteuerventileinheit 350 der Magnetventilvorrichtung 120 gezeigt. Die Magnetventilvorrichtung 120 weist die Hauptventileinheit 340, die mit der Hauptventileinheit 340 fluidmechanisch verbundene Vorsteuerventileinheit 350 und das Gehäuse 230 zum Aufnehmen mindestens der Hauptventileinheit 340 und der Vorsteuerventileinheit 350 auf.

Dabei weist die Vorsteuerventileinheit 350 eine Doppelmagneteinheit 352 und zumindest eine Ventileinrichtung 354 auf. Die Doppelmagneteinheit 352 ist mit zumindest einer Ventileinrichtung 354 bestückbar ausgeformt. Die Doppelmagneteinheit 352 weist zumindest zwei Aufnahmeabschnitte 356 zur Aufnahme von Ventileinrichtungen 354 und zumindest zwei Magneteinrichtungen 358 zum Betätigen von Ventileinrichtungen 354 auf. Die zumindest eine Ventileinrichtung 354 weist einen mittels einer der Magneteinrichtungen 358 bewegbaren Kolben auf. Insbesondere sind die Aufnahmeabschnitte 356 und die Magneteinrichtungen 358 der Doppelmagneteinheit 352 von einem gemeinsamen Korpus der Doppelmagneteinheit 352 umschlossen. Gemäß dem in Fig. 3 dargestellten Ausführungsbeispiel ist die Ventileinrichtung 354 in einem ersten der Aufnahmeabschnitte 356 der Doppelmagneteinheit 352 aufgenommen und ist ein zweiter der Aufnahmeabschnitte 356 der Doppelmagneteinheit 352 unbestückt.

Die Doppelmagneteinheit 352 kann auch als doppelspuliger Magnet bezeichnet werden. Gemäß diesem Ausführungsbeispiel sind die zwei Magneteinrichtungen 358 als zwei zylindrische Spulen ausgeformt. Gemäß einem Ausführungsbeispiel sind die beiden Spulen auf gleicher Höhe angeordnet und/oder weisen zumindest annähernd parallel zueinander ausgerichtete zentrale Achsen auf. Die Aufnahmeabschnitte 356 sind entlang der zentralen Achsen der Spulen ausgerichet und erstrecken sich durch die Spulen hindurch. Gemäß einem Ausführungsbeispiel sind die beiden Spulen benachbart zueinander angeordnet und nur durch eine dünne Wand oder Schicht voneinander getrennt. Zwischen den Spulen ist beispielsweie eine dünnwandige Wand des Korpus angeordnet.

Gemäß dem in Fig. 3 gezeigten Ausführungsbeispiel weist die Magnetventilvorrichtung 120 ferner zumindest einen Vorratsfluidanschluss 361 zum Anschluss der Magnetventilvorrichtung 120 an den Fluidvorrat des Bremssystems auf. Der zumindest eine Vorratsfluidanschluss 361 ist fluidmechanisch mit der Hauptventileinheit 340 und der Vorsteuerventileinheit 350 verbunden. Auch weist die Magnetventilvorrichtung 120 zumindest einen Verbraucherfluidanschluss 362 zum Anschluss der Magnetventilvorrichtung 120 an den Verbraucher des Bremssystems auf. Der zumindest eine Verbraucherfluidanschluss 362 ist fluidmechanisch mit der Hauptventileinheit 340 verbunden. Die Magnetventilvorrichtung 120 weist ferner zumindest einen Steuerfluidanschluss 364 zum Anschluss der Magnetventilvorrichtung 120 an die Steuereinrichtung des Bremssystems auf. Der zumindest eine Steuerfluidanschluss 364 ist fluidmechanisch über die Vorsteuerventileinheit 350 mit der Hauptventileinheit 340 verbunden.

Ferner weist die Magnetventil Vorrichtung 120 gemäß dem in Fig. 3 dargestellten Ausführungsbeispiel beispielhaft lediglich ein Druckbegrenzungsventil 370 bzw. Rückschlagventil auf. Das Druckbegrenzungsventil 370 ist zwischen dem Vorratsfluidanschluss 361 und der Vorsteuerventileinheit 350 fluidmechanisch parallel zu der Hauptventileinheit 340 geschaltet.

Der Vollständigkeit halber sei erläutert, dass die Hauptventileinheit 340 einen Steuerkolben 341, eine Steuerkammer 342, eine Arbeitskammer 343, eine Dichtmanschette 345, beispielsweise in Gestalt einer Doppellippendichtung, und eine Führungshülse 347 aufweist.

In Betrieb der Magnetventilvorrichtung 120 als Vorderachsmodul mit einem Ankersystem seien nachfolgend beispielsweise zwei Betriebsarten im Hinblick auf eine Bremsanforderung kurz erläutert. Eine Betriebsart repräsentiert ein Betriebsbremsen, wobei ein Fahrer des Fahrzeugs bremst. Druckluft als Steuerfluid kommt beispielsweise von einem Fußbremsventil als Steuereinrichtung, tritt in den Steuerfluidanschluss 364 ein und strömt durch die Vorsteuerventileinheit 350 in die Steuerkammer 342 der Hauptventileinheit 340. Der Steuerkolben 341 bewegt sich nach unten und öffnet die Dichtmanschette 345 bzw. bewegt die Dichtmanschette 345. Druckluft als Arbeitsfluid strömt vom Vorratsfluidanschluss 361 in die Arbeitskammer 343 und zu dem Verbraucherfluidanschluss 362. Das Arbeitsfluid kann einen größeren Druck als das Steuerfluid aufweisen. Eine weitere Betriebsart repräsentiert beispielsweise eine Antriebsschlupfregelung oder dergleichen, wobei die Vorsteuerventileinheit 350 geschaltet wird. Der Druck des Arbeitsfluids aus der Steuerkammer 342 und Arbeitskammer 343 wird von dem Druckbegrenzungsventil 370 als Druckminderer reduziert. Der Steuerkolben 341 bewegt sich nach unten und öffnet die Dichtmanschette 345. Das Arbeitsfluid strömt vom Vorratsfluidanschluss 361 in die Arbeitskammer 343 und zu dem Verbraucherfluidanschluss 362.

Gemäß einem Ausführungsbeispiel sind die Anschlüsse 361, 362, 364 als externe Schnittstellen der Magnetventilvorrichtung 120 ausgefomrt. Beispielsweise können die Anschlüsse 361, 362, 364 verwendet werden, um die Magnetventilvorrichtung 120 an Druckluftleitungen eines Bremssystems eines Fahrzeugs anzukoppeln. Dazu kann jeder der Anschlüsse 361, 362, 364 zumindest ein geeignetes Koppelelement zum wiederlösbaren Koppeln mit einer Druckluftleitung aufweisen.

Die in Fig. 3 gezeigten und innerhalb der Magnetventilvorrichtung 120 verlaufenden internen Leitungen, insbesondere zum Verbinden der Hauptventileinheit 340 mit der Vorsteuerventileinheit 350 und zum Verbinden der Ventileinheiten 340, 350 mit den jeweiligen Anschlüssen 361, 362, 364, sind gemäß einem Ausführungsbeispiel durch geeignete Aussparungen innerhalb des Gehäuses 230 ausgeformt.

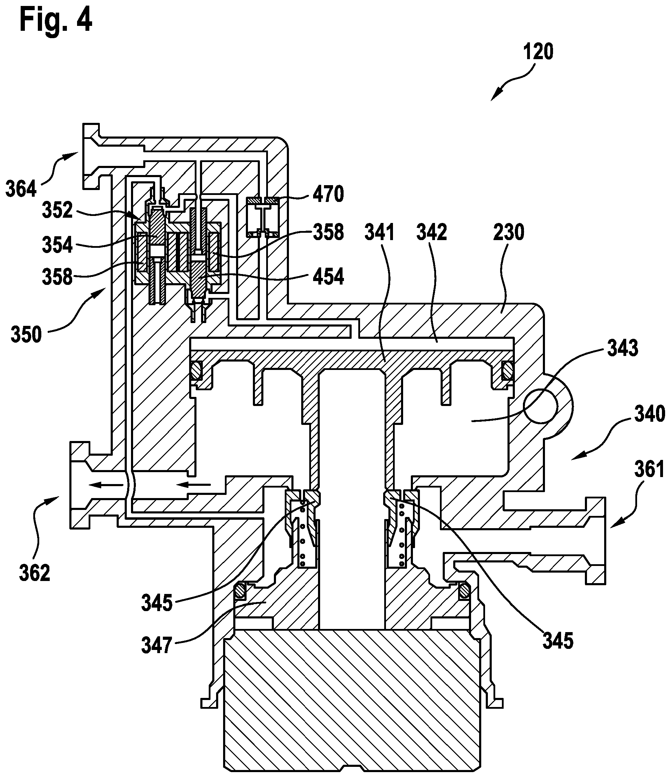

**Fig. 4** zeigt eine schematische Schnittdarstellung einer Magnetventilvorrichtung 120 gemäß einem Ausführungsbeispiel. Die Magnetventilvorrichtung 120 entspricht hierbei der Magnetventilvorrichtung aus Fig. 3 mit Ausnahme dessen, dass die Vorsteuerventileinheit 350 die Ventileinrichtung 354 und eine weitere Ventileinrichtung 454 aufweist, dass infolgedessen eine fluidmechanische Verschaltung von Vorsteuerventileinheit 350 und Hauptventileinheit 340 daran angepasst ist und dass die Magnetventilvorrichtung 120 ein Rückschlagventil 470 aufweist. Anders ausgedrückt handelt es sich bei der Magnetventilvorrichtung 120 beispielsweise um ein Vorderachsmodul mit zwei Ankersystemen.

Hierbei ist die Ventileinrichtung 354 in einem ersten der Aufnahmeabschnitte der Doppelmagneteinheit 352 aufgenommen. Die weitere Ventileinrichtung 454 ist in einem zweiten der Aufnahmeabschnitte der Doppelmagneteinheit 352 aufgenommen. Das Rückschlagventil 470 ist zwischen dem Steuerfluidanschluss 364 der Magnetventilvorrichtung 120 und der Hauptventileinheit 340 fluidmechanisch parallel zu der Vorsteuerventileinheit 350 geschaltet.

Nachfolgend werden verschiedene Betriebsarten der Magnetventilvorrichtung 120 aus Fig. 4 kurz erläutert. Dabei kann die Ventileinrichtung 354 samt zugehöriger Magneteinrichtung 358 auch als Einlassmagnet 354 oder ASR-Einlassmagnet 354 (ASR = Antriebsschlupfregelung) bezeichnet werden und kann die weitere Ventileinrichtung 454 samt zugehöriger Magneteinrichtung 358 auch als Auslassmagnet 454 oder ASR-Auslassmagnet 454 bezeichnet werden.

Bei einer Betätigung einer Betriebsbremse des Fahrzeugs durch einen Fahrer kommt Luft bzw. Druckluft als Steuerfluid von einem Fußbremsventil und strömt durch den Auslassmagneten 454 in die Steuerkammer 342. Der Steuerkolben 341 bewegt sich nach unten und öffnet die Dichtmanschette 345. Luft bzw. Druckluft als Arbeitsfluid strömt von dem Vorratsfluidanschluss 361 in die Arbeitskammer 343 und zu dem Verbraucherfluidanschluss 362.

Eine weitere Betriebsart betrifft eine zentrale Druckkontrolle (CPC = Central Pressure Control) im Fahrzeug. Wenn ich hierbei Druck aufgebaut wird, wird der Auslassmagnet 454 geschaltet, wobei der Einlassmagnet 354 pulsiert, sodass Luft mit Vorratsdruck bzw. Arbeitsfluid in die Steuerkammer 342 strömt. Durch den geschalteten Auslassmagnet 454 kann der höhere Druck des Arbeitsfluidd nicht durch den Steuerfluidanschluss 364 entweichen. Der Steuerkolben 341 bewegt sich nach unten und öffnet die Dichtmanschette 345. Luft bzw. Druckluft als Arbeitsfluid strömt von dem Vorratsfluidanschluss 361 in die Arbeitskammer 343 und zu dem Verbraucherfluidanschluss 362. Im Falle eines sogenannten CPC-Beipasses, wobei der Fahrer erhöht einen Bremsdruck erhöht, strömt der Druck durch das Rückschlagventil 470 bzw. Drosselrückschlagventil 470 in die Steuerkammer 342. Der Steuerkolben 341 bewegt sich nach unten und öffnet die Dichtmanschette 345. Wenn Druck abgebaut werden soll, pulsiert der Auslassmagnet 454 und der Steuerkolben 341 bewegt sich nach oben und vermindert den Druck in der Hauptventileinheit 340 bzw. im Relaisteil.

Eine weitere Betriebsart betrifft eine Bergaufanfahrhilfe (HSA = Hill Start Aid). Wenn hierbei Druck aufgebaut werden soll, wird der Auslassmagnet 454 geschaltet bzw. aktiviert. Wenn der Fahrer den Bremsdruck vermindert, um das Fahrzeug zu starten bzw. in Bewegung zu versetzen, kann aufgrund des geschalteten Auslassmagneten 454 der höhere Druck des Arbeitsfluids nicht zu dem Steuerfluidanschluss 364 entweichen. Der Einlassmagnet 354 pulsiert und der Druck strömt in die Steuerkammer 342. Der Steuerkolben 341 bewegt sich nach unten und öffnet die Dichtmanschette 345. Der Auslassmagnet 454 wird deaktiviert. Der Steuerkolben 341 bewegt sich nach oben und der Druck in der Hauptventileinheit 340 bzw. im Relaisteil wird vermindert.

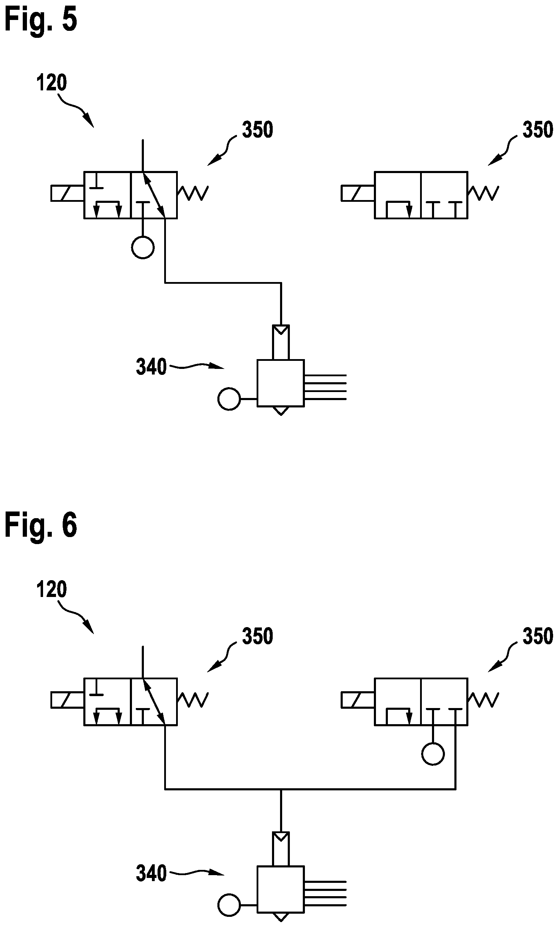

**Fig. 5** zeigt einen schematischen Schaltplan einer Magnetventilvorrichtung 120 gemäß einem Ausführungsbeispiel. Die Magnetventilvorrichtung 120 entspricht oder ähnelt hierbei der Magnetventilvorrichtung aus Fig. 3. In Fig. 5 sind von der Magnetventilvorrichtung 120 in dem Schaltplan Elemente der Vorsteuerventileinheit 350 sowie die Hauptventileinheit 340 mittels konventioneller Schaltzeichen dargestellt. Hierbei ist insbesondere die einseitige Bestückung der Vorsteuerventileinheit 350 zu erkennen. Der unbestückte Aufnahmeabschnitt der Vorsteuerventileinheit 350 ist hierbei durch eine unverbundene Ventileinheit ohne ausgeformte Öffnungen veranschaulicht.

**Fig. 6** zeigt einen schematischen Schaltplan einer Magnetventilvorrichtung 120 gemäß einem Ausführungsbeispiel. Die Magnetventilvorrichtung 120 ähnelt hierbei der Magnetventilvorrichtung aus Fig. 4. In Fig. 6 sind von der Magnetventilvorrichtung 120 in dem Schaltplan Elemente der Vorsteuerventileinheit 350 sowie die Hauptventileinheit 340 mittels konventioneller Schaltzeichen dargestellt. Hierbei ist insbesondere die beidseitige Bestückung der Vorsteuerventileinheit 350 zu erkennen.

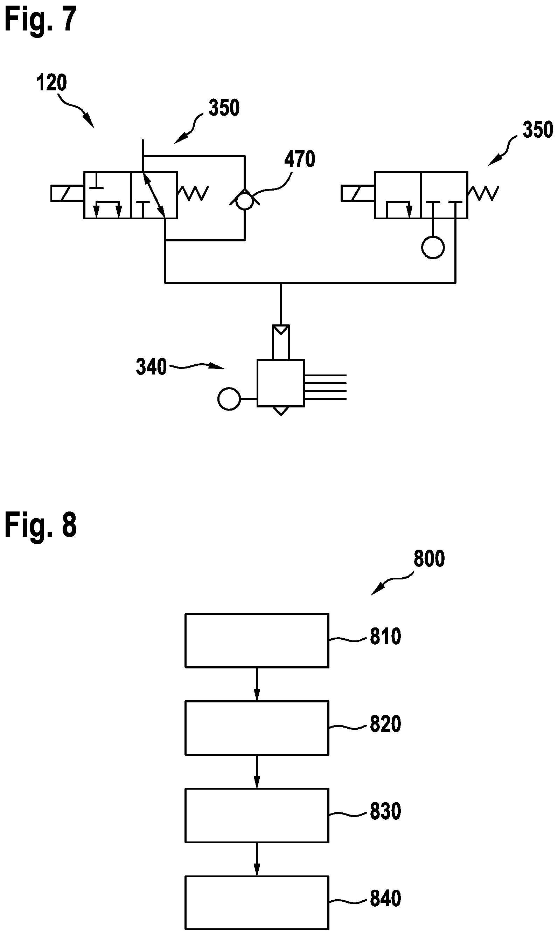

**Fig. 7** zeigt einen schematischen Schaltplan einer Magnetventilvorrichtung 120 gemäß einem Ausführungsbeispiel. Die Magnetventilvorrichtung 120 entspricht oder ähnelt hierbei der Magnetventilvorrichtung aus Fig. 4. In Fig. 7 sind von der Magnetventilvorrichtung 120 in dem Schaltplan Elemente der Vorsteuerventileinheit 350 sowie das Rückschlagventil 470 und die Hauptventileinheit 340 mittels konventioneller Schaltzeichen dargestellt. Hierbei sind insbesondere die beidseitige Bestückung der Vorsteuerventileinheit 350 und das parallel geschaltete Rückschlagventil 470 zu erkennen.

**Fig. 8** zeigt ein Ablaufdiagramm eines Verfahrens 800 zum Montieren gemäß einem Ausführungsbeispiel. Das Verfahren 800 ist ausführbar, um eine Magnetventilvorrichtung für ein Bremssystem für ein Fahrzeug zu montieren. Das Bremssystem entspricht oder ähnelt hierbei dem Bremssystem aus Fig. 1. Die Magnetventilvorrichtung entspricht oder ähnelt der Magnetventilvorrichtung aus einer der vorstehenden Figuren.

Das Verfahren 800 zum Montieren weist einen Schritt 810 des Bereitstellens einer Magnetventilvorrichtung für ein Bremssystem für ein Fahrzeug auf. Die im Schritt 810 des Bereitstellens bereitgestellte Magnetventilvorrichtung entspricht oder ähnelt der Magnetventilvorrichtung aus einer der vorstehenden Figuren. Ferner weist das Verfahren 800 zum Montieren einen Schritt 820 des Anordnens der Doppelmagneteinheit in der Vorsteuerventileinheit auf. Das Verfahren 800 zum Montieren weist auch einen Schritt 830 des Einsetzens der zumindest einen Ventileinrichtung in zumindest einen der Aufnahmeabschnitte der Doppelmagneteinheit auf, um die Doppelmagneteinheit zu bestücken. Zudem weist das Verfahren 800 zum Montieren einen Schritt 840 des Verschließens des Gehäuses auf, um die Vorsteuerventileinheit und die Hauptventileinheit einzuhausen.

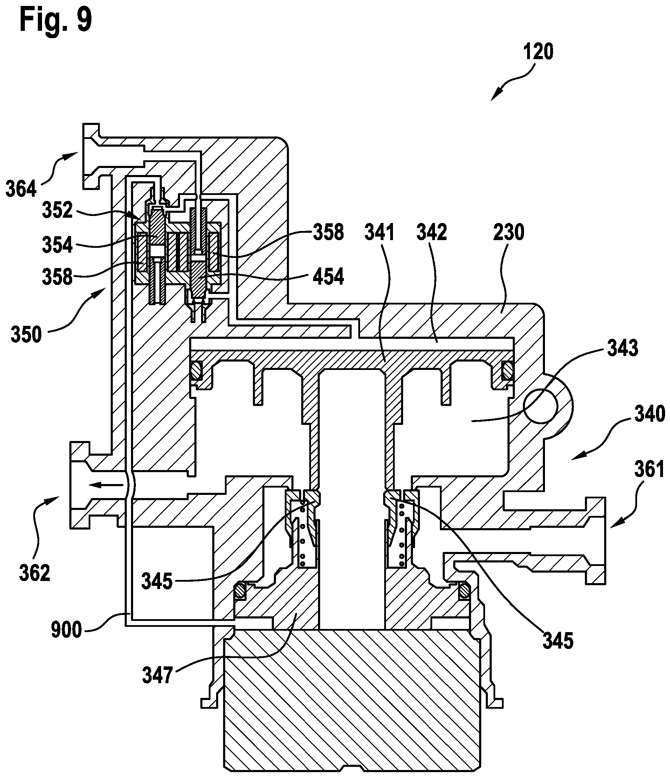

**Fig. 9** zeigt eine schematische Schnittdarstellung einer Magnetventilvorrichtung 120 gemäß einem Ausführungsbeispiel. Die Magnetventilvorrichtung 120 entspricht hierbei der Magnetventilvorrichtung aus Fig. 4 mit Ausnahme dessen, dass der Vorratsfluidanschluss 361 fluidmechanisch lediglich mit der Hauptventileinheit 340 verbunden ist, der das Rückschlagventil umfassende Kanal samt Rückschlagventil entfallen ist und ein Kanal 900 zum Entlüften der Magnetventilvorrichtung 120 vorgesehen ist. Der Kanal 900 ist fluidmechanisch mit der Vorsteuerventileinheit 350 verbunden.

Durch Verbindung des Kanals 900 mit einer Entlüftungssenke, anstatt mit dem Vorratsfluidanschluss 361 wie in Fig. 4, ist die Magnetventilvorrichtung 120 als Druckabbauventil und/oder Druckhalteventil zur ABS-Regelung (ABS = Antiblockiersystem) einsetzbar.

Unter Bezugnahme auf die vorstehenden Figuren sei zusammenfassend und mit anderen Worten angemerkt, dass Magnetventilvorrichtung 120 Beispielsweise als ein skalierbares Vorderachsmodul bzw. Hinterachsmodul ausgeführt ist. Eine Skalierbarkeit kann insbesondere erreicht werden, indem grundsätzlich die Doppelmagneteinheit 352 bzw. ein Doppelmagnet in der Vorsteuerventileinheit 350 eingesetzt wird. Bei manchen Betriebsarten (ASR und ESP bzw. elektronisches Stabilitätsprogramm) wird die Doppelmagneteinheit 352 lediglich einseitig bestückt. Bei beidseitiger Bestückung können auch in der Hauptventileinheit 340 bzw. im Relaisventil Zwischendrücke eingeregelt werden. Dies kann bei anderen Betriebsarten nützlich sein, wie beispielsweise bei ACC-Systemen (ACC = Adaptive Cruise Control; Adaptive Geschwindigkeitsregelung bzw. Abstandsregeltempomat). Bei doppelter Bestückung kann auch ein einseitiges Rückschlagventil 470 eingesetzt werden, damit der Fahrerwunsch gegenüber dem automatischem Einbremsen Priorität hat.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Fahrzeug
- 110: Bremssystem
- 112: Fluidvorrat
- 114: Verbraucher
- 116: Steuereinrichtung
- 118: elektronisches Steuergerät
- 120: Magnetventilvorrichtung

- 230: Gehäuse
- 232: erstes Gehäuseteil
- 234: zweites Gehäuseteil
- 236: Verschließeinrichtung
- 238: Steckerabschnitt

- 340: Hauptventileinheit
- 341: Steuerkolben
- 342: Steuerkammer
- 343: Arbeitskammer
- 345: Dichtmanschette
- 347: Führungshülse
- 350: Vorsteuerventileinheit
- 352: Doppelmagneteinheit
- 354: Ventileinrichtung
- 356: Aufnahmeabschnitt
- 358: Magneteinrichtung
- 361: Vorratsfluidanschluss
- 362: Verbraucherfluidanschluss
- 364: Steuerfluidanschluss
- 370: Druckbegrenzungsventil

- 454: weitere Ventileinrichtung
- 470: Rückschlagventil

- 800: Verfahren zum Montieren
- 810: Schritt des Bereitstellens
- 820: Schritt des Anordnens
- 830: Schritt des Einsetzens
- 840: Schritt des Verschließens

- 900: Kanal

## Patentansprüche

1. Magnetventilvorrichtung (120) für ein Bremssystem (110) für ein Fahrzeug (100), wobei die Magnetventilvorrichtung (120) eine Hauptventileinheit (340), eine mit der Hauptventileinheit (340) fluidmechanisch verbundene Vorsteuerventileinheit (350) und ein Gehäuse (230; 232, 234) zum Aufnehmen mindestens der Hauptventileinheit (340) und der Vorsteuerventileinheit (350) aufweist,
**dadurch gekennzeichnet, dass**
die Vorsteuerventileinheit (350) eine Doppelmagneteinheit (352) und zumindest eine Ventileinrichtung (354; 454) aufweist, wobei die Doppelmagneteinheit (352) mit zumindest einer Ventileinrichtung (354; 454) bestückbar ausgeformt ist, wobei die Doppelmagneteinheit (352) zumindest zwei Aufnahmeabschnitte (356) zur Aufnahme von Ventileinrichtungen (354; 454) und zumindest zwei Magneteinrichtungen (358) zum Betätigen von Ventileinrichtungen (354; 454) aufweist, wobei die Doppelmagneteinheit (352) in dem Gehäuse (230; 232, 234) eingespannt anordenbar oder angeordnet ist.

2. Magnetventilvorrichtung (120) gemäß Anspruch 1,
**dadurch gekennzeichnet, dass**
die Aufnahmeabschnitte (356) und die Magneteinrichtungen (358) der Doppelmagneteinheit (352) von einem gemeinsamen Korpus der Doppelmagneteinheit (352) umschlossen sind.

3. Magnetventilvorrichtung (120) gemäß einem der vorangegangenen Ansprüche,
**dadurch gekennzeichnet, dass**
das Gehäuse (230; 232, 234) zumindest eine Verschließeinrichtung (236) aufweist, mittels derer das Gehäuse (230; 232, 234) öffenbar und verschließbar ist, um mindestens die Vorsteuerventileinheit (350) zugreifbar zu machen.

4. Magnetventilvorrichtung (120) gemäß einem der vorangegangenen Ansprüche,
**dadurch gekennzeichnet, dass**
- das Gehäuse (230; 232, 234) ein erstes Gehäuseteil (232) und ein zweites Gehäuseteil (234) aufweist, wobei die Gehäuseteile (232, 234) kraftschlüssig und/oder formschlüssig miteinander verbindbar oder verbunden sind, und
- die Doppelmagneteinheit (352) zwischen den Gehäuseteilen (232, 234) eingespannt anordenbar oder angeordnet ist.

5. Magnetventilvorrichtung (120) gemäß einem der vorangegangenen Ansprüche,
**dadurch gekennzeichnet, dass**
das Gehäuse (230; 232, 234) zumindest partiell aus einem metallischen Material ausgeformt ist oder partiell aus einem metallischen Material und partiell aus einem Kunststoffmaterial ausgeformt ist.

6. Magnetventilvorrichtung (120) gemäß einem der vorangegangenen Ansprüche,
**dadurch gekennzeichnet, dass**
die Vorsteuerventileinheit (350) einen elektrischen Anschluss zum Kontaktieren der Doppelmagneteinheit (352) aufweist, wobei ein Steckerabschnitt (238) des elektrischen Anschlusses sich aus dem Gehäuse (230; 232, 234) heraus erstreckt.

7. Magnetventilvorrichtung (120) gemäß einem der vorangegangenen Ansprüche,
**dadurch gekennzeichnet, dass**
die Ventileinrichtung (354) in einem ersten der Aufnahmeabschnitte (356) der Doppelmagneteinheit (352) aufgenommen ist und ein zweiter der Aufnahmeabschnitte (356) der Doppelmagneteinheit (352) unbestückt ist, oder die Ventileinrichtung (354) in einem ersten der Aufnahmeabschnitte (356) der Doppelmagneteinheit (352) aufgenommen ist und eine weitere Ventileinrichtung (454) in einem zweiten der Aufnahmeabschnitte (356) der Doppelmagneteinheit (352) aufgenommen ist.

8. Magnetventilvorrichtung (120) gemäß einem der vorangegangenen Ansprüche,
**gekennzeichnet durch**
zumindest ein Rückschlagventil (370; 470), wobei das Rückschlagventil (370; 470) zwischen einem Steuerfluidanschluss (364) der Magnetventilvorrichtung (120) und der Hauptventileinheit (340) fluidmechanisch parallel zu der Vorsteuerventileinheit (350) geschaltet ist und/oder zwischen einem Vorratsfluidanschluss (361) der Magnetventilvorrichtung (120) und der Vorsteuerventileinheit (350) fluidmechanisch parallel zu der Hauptventileinheit (340) geschaltet ist.

9. Magnetventilvorrichtung (120) gemäß einem der vorangegangenen Ansprüche,
**gekennzeichnet durch**
- zumindest einen Vorratsfluidanschluss (361) zum Anschluss der Magnetventilvorrichtung (120) an einen Fluidvorrat (112) des Bremssystems (110), wobei der zumindest eine Vorratsfluidanschluss (361) fluidmechanisch mit der Hauptventileinheit (340) und der Vorsteuerventileinheit (350) verbunden ist,
- zumindest einen Verbraucherfluidanschluss (362) zum Anschluss der Magnetventilvorrichtung (120) an einen Verbraucher (114) des Bremssystems (110), wobei der zumindest eine Verbraucherfluidanschluss (362) fluidmechanisch mit der Hauptventileinheit (340) verbunden ist, und
- zumindest einen Steuerfluidanschluss (364) zum Anschluss der Magnetventilvorrichtung (120) an eine Steuereinrichtung (116) des Bremssystems (110), wobei der zumindest eine Steuerfluidanschluss (364) fluidmechanisch über die Vorsteuerventileinheit (350) mit der Hauptventileinheit (340) verbunden ist.

10. Magnetventilvorrichtung (120) gemäß einem der Ansprüche 1 bis 8,
**gekennzeichnet durch**
- zumindest einen Vorratsfluidanschluss (361) zum Anschluss der Magnetventilvorrichtung (120) an einen Fluidvorrat (112) des Bremssystems (110), wobei der zumindest eine Vorratsfluidanschluss (361) fluidmechanisch mit der Hauptventileinheit (340) verbunden ist,
- zumindest einen Kanal (900) zum Entlüften der Magnetventilvorrichtung (120), wobei der zumindest eine Kanal (900) fluidmechanisch mit der Vorsteuerventileinheit (350) verbunden ist,
- zumindest einen Verbraucherfluidanschluss (362) zum Anschluss der Magnetventilvorrichtung (120) an einen Verbraucher (114) des Bremssystems (110), wobei der zumindest eine Verbraucherfluidanschluss (362) fluidmechanisch mit der Hauptventileinheit (340) verbunden ist, und
- zumindest einen Steuerfluidanschluss (364) zum Anschluss der Magnetventilvorrichtung (120) an eine Steuereinrichtung (116) des Bremssystems (110), wobei der zumindest eine Steuerfluidanschluss (364) fluidmechanisch über die Vorsteuerventileinheit (350) mit der Hauptventileinheit (340) verbunden ist.

11. Bremssystem (110) für ein Fahrzeug (100),
**dadurch gekennzeichnet, dass**
das Bremssystem (110) zumindest eine Magnetventilvorrichtung (120) gemäß einem der vorangegangenen Ansprüche aufweist.

12. Bremssystem (110) gemäß Anspruch 11,
**dadurch gekennzeichnet, dass**
- die zumindest eine Magnetventilvorrichtung (120) ausgebildet ist, um eine Vorderachse und/oder eine Hinterachse des Fahrzeugs (100) anzusteuern, und
- das Bremssystem (110) zumindest ein Schaltventil aufweist, wobei die zumindest eine Magnetventilvorrichtung (120) und das zumindest eine Schaltventil ausgebildet sind, um zusammenzuwirken.

13. Verfahren (800) zum Montieren einer Magnetventilvorrichtung (120) für ein Bremssystem (110) für ein Fahrzeug (100),
**gekennzeichnet durch**
- einen Schritt (810) des Bereitstellens einer Magnetventilvorrichtung (120) gemäß einem der Ansprüche 1 bis 10,
- einen Schritt (820) des Anordnens der Doppelmagneteinheit (352) in der Vorsteuerventileinheit (350),
- einen Schritt (830) des Einsetzens der zumindest einen Ventileinrichtung (354; 454) in zumindest einen der Aufnahmeabschnitte (356) der Doppelmagneteinheit (352), um die Doppelmagneteinheit (352) zu bestücken, und
- einen Schritt (840) des Verschließens des Gehäuses (230; 232, 234), um die Vorsteuerventileinheit (350) und die Hauptventileinheit (340) einzuhausen.

## Claims

1. Solenoid valve apparatus (120) for a brake system (110) for a vehicle (100), wherein the solenoid valve apparatus (120) has a main valve unit (340), a pilot-control valve unit (350) which is fluidically connected to the main valve unit (340), and a housing (230; 232, 234) for accommodating at least the main valve unit (340) and the pilot-control valve unit (350), **characterized in that**
the pilot-control valve unit (350) has a double solenoid unit (352) and at least one valve device (354; 454), wherein the double solenoid unit (352) is formed such that it can be populated with at least one valve device (354; 454), wherein the double solenoid unit (352) has at least two accommodating portions (356) for accommodating valve devices (354; 454) and at least two solenoid devices (358) for actuating valve devices (354; 454), wherein the double solenoid unit (352) is arrangeable or arranged in clamped fashion in the housing (230; 232, 234).

2. Solenoid valve apparatus (120) according to Claim 1, **characterized in that**
the accommodating portions (356) and the solenoid devices (358) of the double solenoid unit (352) are enclosed by a common body of the double solenoid unit (352).

3. Solenoid valve apparatus (120) according to either of the preceding claims,
**characterized in that**
the housing (230; 232, 234) has at least one closing device (236) by means of which the housing (230; 232, 234) is openable and closable in order to make at least the pilot-control valve unit (350) accessible.

4. Solenoid valve apparatus (120) according to any of the preceding claims,
**characterized in that**
- the housing (230; 232, 234) has a first housing part (232) and a second housing part (234), wherein the housing parts (232, 234) are connectable or connected to one another in non-positively locking and/or positively locking fashion, and
- the double solenoid unit (352) is arrangeable or arranged in clamped fashion between the housing parts (232, 234).

5. Solenoid valve apparatus (120) according to any of the preceding claims,
**characterized in that**
the housing (230; 232, 234) is formed at least partially from a metallic material or is formed partially from a metallic material and partially from a plastics material.

6. Solenoid valve apparatus (120) according to any of the preceding claims,
**characterized in that**
the pilot-control valve unit (350) has an electrical connector for the contacting of the double solenoid unit (352), wherein a plug connector portion (238) of the electrical connector extends out of the housing (230; 232, 234).

7. Solenoid valve apparatus (120) according to any of the preceding claims,
**characterized in that**
the valve device (354) is accommodated in a first of the accommodating portions (356) of the double solenoid unit (352) and a second of the accommodating portions (356) of the double solenoid unit (352) is unpopulated, or the valve device (354) is accommodated in a first of the accommodating portions (356) of the double solenoid unit (352) and a further valve device (454) is accommodated in a second of the accommodating portions (356) of the double solenoid unit (352).

8. Solenoid valve apparatus (120) according to any of the preceding claims,
**characterized by**
at least one check valve (370; 470), wherein the check valve (370; 470) is connected between a control fluid port (364) of the solenoid valve apparatus (120) and the main valve unit (340), fluidically in parallel with respect to the pilot-control valve unit (350), and/or is connected between a reservoir fluid port (361) of the solenoid valve apparatus (120) and the pilot-control valve unit (350), fluidically in parallel with respect to the main valve unit (340).

9. Solenoid valve apparatus (120) according to any of the preceding claims,
**characterized by**
- at least one reservoir fluid port (361) for the connection of the solenoid valve apparatus (120) to a fluid reservoir (112) of the brake system (110), wherein the at least one reservoir fluid port (361) is fluidically connected to the main valve unit (340) and to the pilot-control valve unit (350),
- at least one consumer fluid port (362) for the connection of the solenoid valve apparatus (120) to a consumer (114) of the brake system (110), wherein the at least one consumer fluid port (362) is fluidically connected to the main valve unit (340), and
- at least one control fluid port (364) for the connection of the solenoid valve apparatus (120) to a control device (116) of the brake system (110), wherein the at least one control fluid port (364) is fluidically connected to the main valve unit (340) via the pilot-control valve unit (350).

10. Solenoid valve apparatus (120) according to any of Claims 1 to 8,
**characterized by**
- at least one reservoir fluid port (361) for the connection of the solenoid valve apparatus (120) to a fluid reservoir (112) of the brake system (110), wherein the at least one reservoir fluid port (361) is fluidically connected to the main valve unit (340),
- at least one channel (900) for the ventilation of the solenoid valve apparatus (120), wherein the at least one channel (900) is fluidically connected to the pilot-control valve unit (350),
- at least one consumer fluid port (362) for the connection of the solenoid valve apparatus (120) to a consumer (114) of the brake system (110), wherein the at least one consumer fluid port (362) is fluidically connected to the main valve unit (340), and
- at least one control fluid port (364) for the connection of the solenoid valve apparatus (120) to a control device (116) of the brake system (110), wherein the at least one control fluid port (364) is fluidically connected to the main valve unit (340) via the pilot-control valve unit (350).

11. Brake system (110) for a vehicle (100), **characterized in that**
the brake system (110) has at least one solenoid valve apparatus (120) according to any of the preceding claims.

12. Brake system (110) according to Claim 11, **characterized in that**
- the at least one solenoid valve apparatus (120) is designed to actuate a front axle and/or a rear axle of the vehicle (100), and
- the brake system (110) has at least one switching valve, wherein the at least one solenoid valve apparatus (120) and the at least one switching valve are designed to interact.

13. Method (800) for assembling a solenoid valve apparatus (120) for a brake system (110) for a vehicle (100),
**characterized by**
- a step (810) of providing a solenoid valve apparatus (120) according to any of Claims 1 to 10,
- a step (820) of arranging the double solenoid unit (352) in the pilot-control valve unit (350),
- a step (830) of inserting the at least one valve device (354; 454) into at least one of the accommodating portions (356) of the double solenoid unit (352) in order to populate the double solenoid unit (352), and
- a step (840) of closing the housing (230; 232, 234) in order to house the pilot-control valve unit (350) and the main valve unit (340).

## Revendications

1. Dispositif (120) d'électrovanne d'un système (110) de freinage d'un véhicule (100), le dispositif (120) d'électrovanne ayant une unité (340) de vanne principale, une unité (350) de vanne pilote reliées en mécanique des fluides à l'unité (340) de vanne principale et un corps (230 ; 232, 234) de réception au moins de l'unité(340) de vanne principale et de l'unité (350) de vanne pilote,
**caractérisé en ce que**
l'unité (350) de vanne pilote a une unité (352) à double aimant et au moins un dispositif (354 ; 454) de vanne, dans lequel l'unité (352) à double aimant est formée en pouvant être équipée d'au moins un dispositif (354 ; 454) de vanne, dans lequel l'unité (352) à double aimant a au moins deux parties (356) de réception, pour la réception de dispositifs (354 ; 454) de vanne et au moins deux dispositifs (358) à aimant pour l'actionnement de dispositifs (354 ; 454) de vanne, dans lequel l'unité (352) à double aimant est montée en étant encastrée dans le corps (230 ; 232, 234) ou peut l'être.

2. Dispositif (120) d'électrovanne suivant la revendication 1,
**caractérisé en ce que**
les parties (356) de réception et les dispositifs (358) à aimant de l'unité (352) à double aimant sont entourés d'un corps commun de l'unité (352) à double aimant.

3. Dispositif (120) d'électrovanne suivant l'une des revendications précédentes,
**caractérisé en ce que**
le corps (230 ; 232, 234) a au moins un dispositif (236) de fermeture, au moyen duquel le corps (230 ; 232, 234) peut être ouvert et fermé, pour rendre accessible au moins l'unité (350) de vanne pilote.

4. Dispositif (120) d'électrovanne suivant l'une des revendications précédentes,
**caractérisé en ce que**
- le corps (230 ; 232, 234) a une première partie (232) et une deuxième partie (234), dans lequel les parties (232, 234) du corps sont reliées entre elles à coopération de force et/ou à complémentarité de forme ou peuvent l'être, et
- l'unité (352) à double aimant est montée en étant encastrée entre les parties (232, 234) du corps ou peut l'être.

5. Dispositif (120) d'électrovanne suivant l'une des revendications précédentes,
**caractérisé en ce que**
le corps (230 ; 232, 234) est au moins en partie en un matériau métallique ou en partie en un matériau métallique et en partie en une matière plastique.

6. Dispositif (120) d'électrovanne suivant l'une des revendications précédentes,
**caractérisé en ce que**
l'unité (350) de vanne pilote à une connexion électrique de mise en contact de l'unité (352) à double aimant, une partie (238) de connecteur de la connexion électrique sortant du corps (230 ; 232, 234) .

7. Dispositif (120) d'électrovanne suivant l'une des revendications précédentes,
**caractérisé en ce que**
le dispositif (354) de vanne est reçu dans une première des parties (356) de réception de l'unité (352) à double aimant et une deuxième des parties (356) de réception de l'unité (352) à double aimant est inoccupée, ou le dispositif (354) de vanne est reçu dans une première des parties (356) de réception de l'unité (352) à double aimant et un autre dispositif (454) de vanne est reçu dans une deuxième des parties (356) de réception de l'unité (352) à double aimant.

8. Dispositif (120) d'électrovanne suivant l'une des revendications précédentes,
**caractérisé par**
au moins un clapet (370 ; 470) antiretour, dans lequel le clapet (370 ; 470) antiretour est monté, en mécanique des fluides, en parallèle à l'unité (350) de vanne pilote, entre un raccord (364) pour du fluide de commande du dispositif (120) d'électrovanne et l'unité (340) de vanne principale et/ou est monté, en mécanique des fluides, en parallèle à l'unité (340) de vanne principale entre un raccord (361) pour du fluide de réservoir du dispositif (120) d'électrovanne et l'unité (350) de vanne pilote.

9. Dispositif (120) d'électrovanne suivant l'une des revendications précédentes,
**caractérisé par**
- au moins un raccord (361) pour du fluide de réservoir pour le raccordement du dispositif (120) d'électrovanne à un réservoir (112) de fluide du système (110) de freinage, dans lequel le au moins un raccord (361) pour du fluide de réservoir communique, en mécanique des fluides, avec l'unité (340) de vanne principale et l'unité (350) de vanne pilote,
- au moins un raccord (362) de fluide de consommateur pour le raccordement du dispositif (120) d'électrovanne à un consommateur (114) du système (110) de freinage, dans lequel le au moins un raccord (362) pour du fluide de consommateur communique, en mécanique des fluides, avec l'unité (340) de vanne principale, et
- au moins un raccord (364) pour du fluide de commande pour le raccordement du dispositif (120) d'électrovanne à un dispositif (116) de commande du système (110) de freinage, dans lequel le au moins un raccord (364) pour du fluide de commande communique, en mécanique des fluides, avec l'unité (340) de vanne principale, par l'intermédiaire de l'unité (350) de vanne pilote.

10. Dispositif (120) d'électrovanne suivant l'une des revendications 1 à 8,
**caractérisé par**
- au moins un raccord (361) pour du fluide de réservoir pour le raccordement du dispositif (120) d'électrovanne à un réservoir (112) de fluide du système (110) de freinage, dans lequel au moins un raccord (361) pour du fluide de réservoir communique, en mécanique des fluides, avec l'unité (340) de vanne principale,
- au moins un conduit (900) de purge du dispositif (120) d'électrovanne, dans lequel le au moins un conduit (900) communique, en mécanique des fluides, avec l'unité (350) de vanne pilote,
- au moins un raccord (362) pour du fluide de consommateur pour le raccordement du dispositif (120) d'électrovanne à un consommateur (114) du système (110) de freinage, dans lequel le au moins un raccord (362) pour du fluide de consommateur communique, en mécanique des fluides, avec l'unité (340) de vanne principale, et
- au moins un raccord (364) pour du fluide de commande pour un raccordement du dispositif (120) d'électrovanne à un dispositif (116) de commande du système (110) de freinage, dans lequel le au moins un raccord (364) pour du fluide de commande communique, en mécanique des fluides, avec l'unité (340) de vanne principale par l'intermédiaire de l'unité (350) de vanne pilote.

11. Système (110) de freinage d'un véhicule (100),
**caractérisé en ce que**
le système (110) de freinage a au moins un dispositif (120) d'électrovanne suivant l'une des revendications précédentes.

12. Système (110) de freinage suivant la revendication 11,
**caractérisé en ce que**
- le au moins un dispositif (120) d'électrovanne est constitué pour commander un essieu avant et/ou un essieu arrière du véhicule (100), et
- le système (110) de freinage a au moins une soupape de commande, dans lequel le au moins un dispositif (120) d'électrovanne et la au moins une soupape de commande sont constitués pour coopérer.

13. Procédé (800) de montage d'un dispositif (120) d'électrovanne d'un système (110) de frein d'un véhicule (100),
**caractérisé par**
- un stade (810) de mise à disposition d'un dispositif (120) d'électrovanne suivant l'une des revendications 1 à 10,
- un stade (820) de montage de l'unité (352) à double aimant, dans l'unité (350) de vanne pilote,
- un stade (830) d'insertion du au moins un dispositif (354 ; 454) de vanne, dans au moins l'une des parties (356) de réception de l'unité (352) à double aimant, pour équiper l'unité (352) à double aimant, et
- un stade (840) de fermeture du corps (230 ; 232, 234), afin d'y loger à l'intérieur l'unité (350) de vanne pilote et l'unité (340) de vanne principale.
